# EUROPEAN PATENT SPECIFICATION

(11) **EP 1 372 140 B1**
(45) Date of publication and mention of the grant of the patent: **25.06.2008**
(21) Application number: 03008035.2
(22) Date of filing: 11.04.2003
(51) Int. Cl.: G11B 5/64, G11B 5/84

(54) **A perpendicular magnetic memory medium, a manufacturing method thereof, and a magnetic memory storage**
Ein senkrechtes magnetisches Speichermittel, ein Verfahren zu seiner Herstellung, und magnetische Speichervorrichtung
Un moyen de mémoire magnétique perpendiculaire, un procédé pour sa fabrication, et mémoire magnétique de stockage

(30) Priority: 10.06.2002 JP 2002168411
(43) Date of publication of application: 17.12.2003
(73) Proprietor: FUJITSU LIMITED, Kawasaki-shi, Kanagawa 211-8588 (JP)
(72) Inventor: Nobutaka, Ihara Fujitsu Limited, Kawasaki-shi, Kanagawa 211-8588 (JP); Hiroyoshi, Kodama Fujitsu Limited, Kawasaki-shi, Kanagawa 211-8588 (JP); Takuya, Uzumaki Fujitsu Limited, Kawasaki-shi, Kanagawa 211-8588 (JP)
(74) Representative: Sunderland, James Harry

(56) References cited:
- EP-A- 1 226 878
- US-A1- 2002 034 666
- S. SUN ET AL.: "Monodisperse FePt nanoparticles and ferromagnetic FePt nanocrystal superlattices" SCIENCE., vol. 287, no. 5460, 17 March 2000 (2000-03-17), pages 1989-1992, XP001089844 AAAS. LANCASTER, PA., US ISSN: 0036-8075

## Description

### BACKGROUND OF THE INVENTION

### 1. Field of the Invention

The present invention generally relates to a perpendicular magnetic memory medium, a manufacturing method thereof, and a magnetic memory storage that contains the perpendicular magnetic memory medium, and especially relates to a perpendicular magnetic memory medium that is suitable for high-density recording and reproducing, a manufacturing method thereof, and a magnetic memory storage that contains the perpendicular magnetic memory medium.

### 2. Description of the Related Art

In recent years, the memory capacity of a magnetic memory storage has greatly expanded, the physical dimensions thereof are remarkably becoming small, and the recording density of, e.g., a magnetic disk drive of an in-plane magnetic memory is growing at an annual rate of 100%.

Since it is envisaged that a perpendicular magnetic memory provides a recording density that is far higher than the in-plane magnetic memory, because adjacent magnetized regions do not interfere with each other, generating little influence of an anti-magnetic field, the perpendicular magnetic memory is drawing attention again.

In order to enhance the recording density of the perpendicular magnetic memory medium, medium noise of a recording layer has to be reduced, while securing a signal output. To achieve this, the diameter of crystal nanoparticles of a hard magnetic metal thin film used for a recording layer has to be fine and uniform. Conventionally, the thin film of a CoCr system alloy has been used as the recording layer. In order that the diameter of the nanoparticles is made small, elements such as V, Nb, and the like have been added to the CoCr system alloy. However, controlling the distribution of the diameter of the nanoparticles has been a difficult matter, with the diameter becoming smaller and smaller, making it difficult to manufacture a recording layer suitable for further higher-density recording.

As a technique for comparatively easily obtaining hard magnetic nanoparticles of a minute and uniform diameter for a recording layer, a chemical method has been proposed by Sun et al. in Science, 287th volume No.17 (2000) pp.1989, and by JP,2000-54012,A. According to the method, the hard magnetic nanoparticles are compounded chemically, and are autonomously orientated by the intermolecular force, thereby the hard magnetic nanoparticles, which are orderly oriented, are obtained. In the recording layer, wherein the nanoparticles are oriented in this manner, a nanoparticles exchange interaction and a magnetostatic interaction are reduced, and medium noise is decreased. However, since these interactions are reduced, the thermal stability of the recorded magnetization is deteriorated.

In order to improve the thermal stability, it is considered necessary that a material that has high magnetic anisotropy energy be used. Ordered alloys, such as FePt, CoFe, and FePd, are being studied as the material.

Nanoparticles of such as FePt, if compounded chemically by the above-mentioned technique, have low magnetic anisotropy energy and low coercivity, and the nanoparticles compounded by the above-mentioned technique cannot be used for recording and reproducing. Then, in order to raise the magnetic anisotropy energy, heat treatment is performed at a temperature of about 600 degrees C such that the nanoparticles are made an ordered alloy. The heat treatment is carried out in a vacuous environment from a viewpoint of preventing oxidization of the nanoparticles.

However, even if the heat treatment is simply performed, magnetic orientation of the hard magnetic nanoparticles remains random in three dimensions. Therefore, even if the perpendicular recording method is attempted for high-density recording and reproducing, sufficient reproduction output is not obtained, and the high-density recording and reproducing cannot be performed.

Further, the heat treatment deteriorates performances of a soft magnetic lining layer included in the perpendicular magnetic memory medium that is made of a permalloy of poly crystal such as an amorphous material and microcrystal. More specifically, by the heat treatment in high temperatures; coercivity and a magnetic distortion increase, and high frequency characteristics of the soft magnetism of the soft magnetic lining layer deteriorates, hence high-density recording and reproducing cannot be performed.

Furthermore, in the heat treatment at the high temperatures, a glass substrate and an aluminum substrate of the perpendicular magnetic memory medium are softened, and the flatness of the substrate is deteriorated. A reproducing head has to approach the perpendicular magnetic memory medium as close as dozens of nanometers for reproducing high-density recording and reproducing. Perpendicular magnetic memory medium having a poor flatness can cause problems such as a head crash, and the high-density recording and reproducing cannot be performed.

US2002/003466 relates to a method of patterning a nanoparticle array of a magnetic recording medium and the recording medium per se. It is indicated that ferromagnetic nanoparticles one to ten nm in diameter may be used, with a spacing of approximately one to five nm.

D2: S. Sun et al.: "Monodisperse FePt nanoparticles and ferromagnetic FePt nanocrystal superlattices", SCIENCE, vol. 287, no. 5460, 17 March 2000, pages 1989-1992, AAAS. LANCASTER, Pa., US, concerns synthesis, for magnetic recording applications, of monodisperse nanoparticles from 3 to 10 nm diameter with a standard deviation of less than 5%. Spacings of about 2 to 4 nm are mentioned.

EP-A-1 226 878 discloses a method of manufacturing a magnetic recording medium with magnetic nanoparticles using heat treatment in nitrogen gas with a magnetic field applied perpendicularly.

### SUMMARY OF THE INVENTION

Accordingly, the present invention is made in view of the above-mentioned problems, and the objective of the present invention is to provide a perpendicular magnetic memory medium, a manufacturing method thereof, and a magnetic memory storage that contains the perpendicular magnetic memory medium for high-density recording and reproducing, which substantially obviate one or more of the problems caused by the limitations and disadvantages of the related art.

Features and advantages of the present invention will be set forth in the description that follows, and in part will become apparent from the description and the accompanying drawings, or may be learned by practice of the invention according to the teachings provided in the description. Objects as well as other features and advantages of the present invention will be realized and attained by the perpendicular magnetic memory medium, the manufacturing method thereof, and the magnetic memory storage that contains the perpendicular magnetic memory medium for high-density recording and reproducing, which are particularly pointed out in the specification in such full, clear, concise, and exact terms as to enable a person having ordinary skill in the art to practice the invention.

To achieve these and other advantages and in accordance with the purpose of the invention, as embodied and broadly described herein, the invention provides the perpendicular magnetic memory medium, the manufacturing method thereof, and the magnetic memory storage that contains the perpendicular magnetic memory medium for high-density recording and reproducing as follows.

The present invention provides the perpendicular magnetic memory medium that includes a recording layer made of hard magnetic nanoparticles arranged on a substrate, wherein the average of the diameters of the hard magnetic nanoparticles ranges between 2nm and 10nm the standard deviation thereof is less than 10% of the average of the diameter of the nanoparticles, the average interval between the hard magnetic nanoparticles ranges between 0.2nm and 5nm, and the magnetic easy axis of the recording layer is perpendicular to the face of the substrate.

In the present invention, the diameter of the hard magnetic nanoparticles is made minute, the distribution of diameter of the nanoparticles is controlled, and the average interval between the hard magnetic nanoparticles is controlled to a fixed range. Therefore, the exchange interaction between the hard magnetic nanoparticles and the magnetostatic interaction are suppressed, and the medium noise is reduced. Further, the magnetic easy axis of the recording layer is set perpendicular to the substrate face, i.e., the recording layer has perpendicular magnetic anisotropy, such that sufficient reproduction output is obtained by the perpendicular magnetic memory. High-density recording and reproducing are attained in this manner.

Here, "the magnetic easy axis of the recording layer is perpendicular to the face of the substrate" means that the magnetic easy axis of each hard magnetic nanoparticle is aligned approximately perpendicular, subject to angle distribution. The angle distribution is expressed by a ratio H_{c2}/H_{c1}, where H_{c1} represents perpendicular coercivity that is the coercivity in the perpendicular direction to the substrate face, i.e., the face of a film of the recording layer, and Hc2 represents in-plane coercivity that is the coercivity in the parallel direction to the substrate face. The ratio Hc2/Hcl is preferred to be 30% or less, and more preferably, to be 10% or less. Where the ratio is sufficiently small, the width of the magnetization transition region of the remnant magnetism after recording becomes narrow, and the perpendicular magnetic memory medium suitable for high-density recording and reproducing is obtained.

The hard magnetic nanoparticles of the present invention contain at least two or more elements selected from the group consisting of Fe, Co, Ni, Pt, and Pd.

The present invention employs alloys, such as FePt and CoPd, for the hard magnetic nanoparticles that form the recording layer. The alloys show ferromagnetism, high magnetic anisotropy energy, and high perpendicular coercivity since the magnetic easy axis is arranged perpendicularly to the substrate. Accordingly, recording bits having a small magnetization transition region are formed, and sufficient reproduction output can be obtained in the high-density recording and reproducing. Further, the alloys can provide stronger coercivity, for example, by heat treatment in a magnetic field, which regularizes an atomic arrangement, and the magnetic easy axis of the hard magnetic nanoparticles can be aligned perpendicularly to the substrate face. Here, the hard magnetic nanoparticles of only one element of Co, Fe, and Ni show the ferromagnetism. However, magnetic anisotropy energy is not enough to be suitable for the high-density recording and reproducing.

The present invention provides a soft magnetic lining layer made of an alloy of at least one of Fe, Co, Ni, Al, Si, Ta, Ti, Zr, Hf, V, Nb, C, and B, thereby the magnetic field of a monopole magnetic head is prevented from spreading in the horizontal (in-plane) direction of the recording layer, such that the magnetic field is perpendicularly applied to the recording layer, and a recording bit with a minute magnetization transition region is formed.

The present invention also provides a manufacturing method of the perpendicular magnetic memory medium, which includes a process wherein magnetism is perpendicularly applied to the recording layer, while heat treatment in a gas atmosphere is applied to the recording layer. The heat treatment process in the magnetic field makes the magnetic easy axis of the recording layer perpendicular to the substrate face.

In this manner, atoms of the alloy are regularized (ordered alloy is made), and the magnetic easy axis is made perpendicular to the substrate face, providing increased perpendicular coercivity that is suitable for the high-density recording and reproducing.

The manufacturing method of the present invention provides that the heat treatment in the magnetic field uses the principle that the higher the gas atmosphere pressure is, the lower the heat treatment temperature is.

The lower temperature of the heat treatment prevents deterioration of the flatness of the recording layer of the memory medium that has desired perpendicular coercivity, and prevents deterioration of the high frequency characteristics of the soft magnetic lining layer.

The heat treatment of the present invention uses a gas that prevents oxidization of the hard magnetic nanoparticles. In this manner, deterioration of the coercivity by oxidization is prevented. Preferably, N₂ gas is used as the gas for the heat treatment. Desired perpendicular coercivity can be obtained at a lower heat treatment temperature.

The present invention also provides the magnetic memory storage equipped with the perpendicular magnetic memory medium according to the present invention.

In this manner, the magnetic memory storage of the present invention is capable of high-density recording and reproducing.

### BRIEF DESCRIPTION OF THE DRAWINGS

Fig. 1 is a sectional view showing a structure of a perpendicular magnetic memory medium of an embodiment of the present invention;
Fig. 2 is a view showing a manufacturing process of the perpendicular magnetic memory medium of the embodiment of the present invention;
Fig. 3 is a view showing an outline configuration of a spin coater;
Fig. 4 is a view showing an outline configuration of a dip coater;
Fig. 5 is a sectional view showing a configuration of a heat treatment in magnetic field equipment using a magnet in the normal condition;
Fig. 6 is a sectional view showing a configuration of the heat treatment in the magnetic field equipment using a superconductivity magnet;
Fig. 7 is a view showing relations between perpendicular coercivity and heat treatment temperatures;
Fig. 8 is a view showing relations between a lattice constant of c axis of FePt that constitute hard magnetic nanoparticles and heat treatment temperatures;
Fig. 9 is a view showing relations between perpendicular coercivity of the perpendicular magnetic memory medium and N2 gas atmosphere pressure in the fifth embodiment of the present invention;
Fig. 10 is a view showing an X-ray diffraction pattern of the perpendicular magnetic memory medium of the sixth and the seventh embodiments of the present invention;
Fig. 11 is a sectional view showing the principal part of an embodiment of the magnetic memory storage; and
Fig. 12 is a plane view showing the principal part of the embodiment of the magnetic memory storage shown in Fig. 11.

### DESCRIPTION OF THE PREFERRED EMBODIMENTS

In the following, embodiments of the present invention will be described with reference to the accompanying drawings.

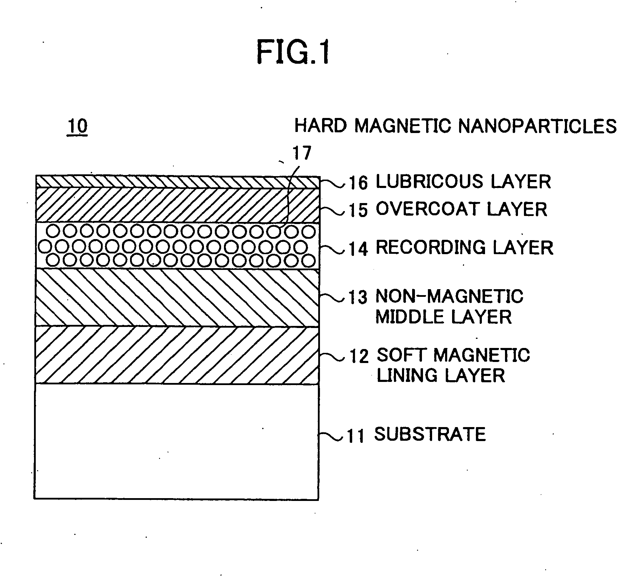

Fig. 1 is a sectional view of a perpendicular magnetic memory medium 10 of the embodiment of the present invention. As shown in Fig. 1, the perpendicular magnetic memory medium 10 includes a substrate 11, on which a soft magnetic lining layer 12, a non-magnetic middle layer 13, a recording layer 14 that is made of hard magnetic nanoparticles 17, a overcoat layer 15, and a lubricous layer 16 are layered in this sequence.

The substrate 11 is, for example, a crystallized glass substrate, a tempered glass substrate, an aluminum substrate, Si wafer, a plastic substrate, a PET film, and the like. The crystallized glass substrate, Si wafer, and the like, are preferably used from a heat-resistant viewpoint.

The soft magnetic lining layer 12, is made of a soft magnetic material, having thickness between 100 nm and 2 micrometers, and high saturation flux density Bs, such as amorphous alloys and alloys of a fine crystal of at least one of Fe, Co, Ni, Al, Si, Ta, Ti, Zr, Hf, V, Nb, C, and B, and a laminating film of the alloys. For example, FeAlSi, FeTaC, NiFeNb (Bs=0.7T), CoCrNb (Bs=1.2T), and the like are used. The soft magnetic lining layer 12 is formed by a plating method, a sputtering method, a vacuum evaporation method, CVD method (chemical vapor deposit methods), and the like. The soft magnetic lining layer 12 is for absorbing all the magnetic flux from a monopole magnetic head, when recording by the monopole magnetic head. In order to carry out saturation recording, it is desirable that the product of the saturation flux density Bs and the film thickness is as great as possible. Further, it is desirable that the high frequency characteristics of the soft magnetism, for example, high frequency magnetic permeability, is as high as possible, such that recording at a high transfer speed is obtained. Here, when a ring type head performs recording, it is not necessary to provide the soft magnetic lining layer 12.

The non-magnetic middle layer is 1 nm to 50 nm thick, and is constituted by a non-magnetic material, such as Ti, C, Pt, TiCr, CoCr, SiO₂, MgO, and Al₂O₃. Further, the non-magnetic middle layer 13 may be a laminating film that contains these materials. The non-magnetic middle layer 13 is formed by the sputtering method, the vacuum evaporation method, the CVD method, and the like. The non-magnetic middle layer 13 is formed for, e.g., intercepting magnetostatic interaction of the soft magnetic lining layer 12 and the recording layer 14.

The recording layer 14 includes the hard magnetic nanoparticles 17, each of the nanoparticles being of a globular form and the nanoparticles being aligned, and amorphous carbon fills intervals among the hard magnetic nanoparticles 17. Thickness of the recording layer 14 is set between 3 nm and 50 nm. Here, the recording layer 14 may consist of a single layer or a laminating of layers, layered in the direction of the film thickness, of the hard magnetic nanoparticles 17.

As for the hard magnetic nanoparticles 17, an alloy of materials, such as FePt, FePd, CoPt, and CoPd, is used. The alloy has high magnetic anisotropy energy, providing high perpendicular coercivity. Here, a composition of an alloy is expressed as Fe₁₀₀₋ₓPtₓ, Fe₁₀₀₋ₓPdₓ, Co₁₀₀₋ₓPtₓ, and Co_{100- x}Pdₓ, where the suffix indicates a content percentage. It is desirable that X ranges between 20at% and 60at%, more preferably between 35at% and 55a.t%. By setting the composition in the range, high magnetic anisotropy energy is obtained, and high perpendicular coercivity is obtained.

Furthermore, N, B, C, or P may be added to these alloys as the third element, such that higher magnetic anisotropy energy and higher perpendicular coercivity are obtained.

The average diameter of the nanoparticles of the hard magnetic nanoparticles 17 is set between 2 nm and 10 nm. If the average diameter of the nanoparticles exceeds 10 nm, the volume of the intervals among the hard magnetic nanoparticles 17, the interval being non-magnetic, becomes large, and a medium noise increases. If the average diameter of the nanoparticles is set to less than 2nm, the hard magnetic nanoparticles 17 tend to become superparamagnetic in the room temperature, and cannot maintain ferromagnetism.

Further, the standard deviation of the diameters of the hard magnetic nanoparticles 17 is set at 10% or less of the average diameter of the nanoparticles 17. If the standard deviation exceeds 10% of the average diameter of the nanoparticles 17, the distribution of the magnetostatic interaction of the hard magnetic nanoparticles 17 becomes large, and the medium noise increases.

Furthermore, the average value of the intervals between the hard magnetic nanoparticles 17, i.e., the average interval between the adjacent hard magnetic nanoparticles 17, is set between 0.2 nm and 5 nm. If the average interval exceeds 5 nm, the volume of the interval portion that is non-magnetic between the hard magnetic nanoparticles 17 becomes large, and the medium noise increases, or a reproduction output declines. If the average interval is less than 0.2 nm, the exchange interaction between the hard magnetic nanoparticles 17 increases and the medium noise increases.

Generally, the magnetic easy axis of the recording layer 14 is perpendicular to the substrate face. In more detail, the magnetic easy axis of each hard magnetic nanoparticles 17 is approximately perpendicular, having angle distribution. The angle distribution is expressed by a ratio H_{c2}/H_{c1}, where H_{c1} represents perpendicular coercivity, and H_{c2} represents in-plane coercivity. The ratio is preferably set less than 30%, more preferably less than 10%. In the range, the width of the magnetization transition region of the remnant magnetism after recording becomes narrow, and the perpendicular magnetic memory medium suitable for high-density recording and reproducing is obtained.

The overcoat layer 15, which is 0.5 nm to 15 nm thick, is constituted from carbon, carbon hydride, carbon nitride, and the like. The overcoat layer 15 is formed by the sputtering method, the CVD method, and the like.

The lubricous layer 16, which is 0.5 nm to. 5 nm thick, is provided on the overcoat layer 15. The lubricous layer 16 is constituted from a lubricant, for example, that contains perfluoro polyether as the main chain, and the like. The lubricous layer 16 is formed by the dipping method, and the like.

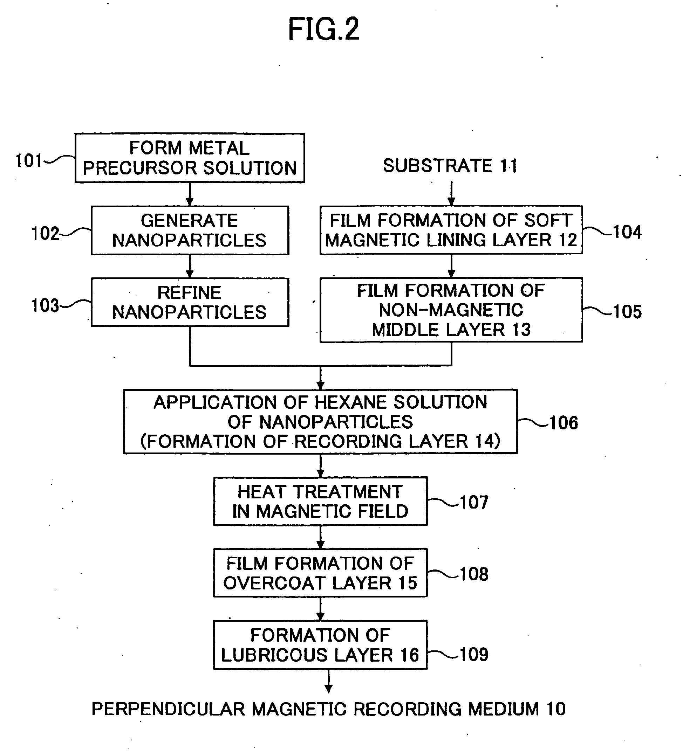

Hereafter, the manufacturing method of the perpendicular magnetic memory medium 10 of the embodiment is explained with reference to Fig. 2 that shows the manufacturing process of the perpendicular magnetic memory medium 10.

With reference to Fig. 2, the manufacturing process of the perpendicular magnetic memory medium 10 includes a process that prepares a hexane solution of nanoparticles (Step 101 - Step 103), a process that prepares a substrate 21 from the substrate 11 to which the hexane solution of nanoparticles is to be applied (Step 104, and Step 105), and a process that applies the hexane solution of nanoparticles to the substrate 21 such that the recording layer 14 is formed, and heat treatment in a magnetic field is performed, and so on (Step 106 - Step 109).

First, in the process (Step 101 - Step 103) that prepares the hexane solution of nanoparticles, formation of metal precursor solution (Step 101), generation of nanoparticles (Step 102), and refining of the nanoparticles (Step 103) are performed in this order.

### (Formation of metal precursor solution (Step 101))

At Step 101, Pt complex, for example, 0.5m mol of acetyl acetonat platinum Pt(C₅H₇O₂)₂, and a reducing agent, for example, 1.5m mol of 1, 2-hexa decandiol are dissolved in 20cm³ of dioctyl ether that serves as a solvent at 100 degrees C in an N₂ atmosphere.

Then, Fe complex, for example, 1m mol of penta carbonyl iron Fe(CO)₅, and a stabilizer, for example, 0.5m mol of oleic acid, and 0.5m mol of oleyl amine are added. This produces the metal precursor solution. The solution is heated to 297 degrees C, while refluxing and agitating. The composition of the nanoparticles of FePt to be produced is controllable by the ratio of the quantity of Pt complex and Fe complex.

### (Generation of nanoparticles (Step 102))

Next, the metal precursor solution is agitated for 30 minutes at 297 degrees C, such that nanoparticles are grown up. Thereby, nanoparticles of Fe₅₀Pt₅₀ of 6nm in diameter and 4nm of an average interval are generated. The nanoparticles are stabilized by the stabilizer that covers the surface of the nanoparticles, and the nanoparticles can be handled in air.

In addition, the average interval between the nanoparticles is controllable by selecting the stabilizer. For example, if hexane acid and hexylamin are used, the average interval of the nanoparticles can be set to 1 nm. Although the nanoparticles will turn into hard ferromagnetism nanoparticles by heat treatment in a magnetic field, as mentioned later, they do not have ferromagnetism at this stage.

### (Refining of the nanoparticles (Step 103))

Next, a by-product that is synthesized, and remnant (unreacted) agent attached to the nanoparticles are removed. For this purpose, ethanol is added, the nanoparticles are settled and a centrifuge removes supernatant fluid. Furthermore, the nanoparticles are re-distributed in hexane, and ethanol is added. Then, the nanoparticles are settled, and a centrifuge removes supernatant fluid, such that the refinement is performed again.

Next, with reference to Fig. 2, in the process of preparing the substrate 21 to which the hexane solution of nanoparticles is to be applied, film formation of the soft magnetic lining layer 12 on the substrate 11 (Step 104), and film formation of the non-magnetic middle layer 13 (Step 105) are performed in this order.

### (Film formation of the soft magnetic lining layer (Step 104))

On the substrate 11, which is, for example, a 2.5 inch Si substrate having SiO₂ formed on its surface by heat oxidization, a film of the soft magnetic lining layer 12 is formed by the plating method, the sputtering method, the vacuum evaporation method, and the like.

### (The non-magnetic middle layer 13 film formation (Step 105))

A film of the non-magnetic middle layer 13 is formed on the soft magnetic lining layer 12 by the plating method, the sputtering method, the vacuum evaporation method, the CVD method, and the like.

Next, with reference to Fig. 2, at the process (Step 106 - Step 109) that carries out the heat treatment in the magnetic field, and so on, the hexane solution of nanoparticles is applied (Step 106) to the substrate 21 that has been processed up to the non-magnetic middle layer 13. Then, the heat treatment in the magnetic field (Step 107) for regularizing the nanoparticles and producing ferromagnetism and perpendicular magnetic anisotropy is performed. Then, film formation of the overcoat layer 15 on the recording layer 14 (Step 108), and application of the lubricous layer 16 to the overcoat layer 15 (Step 109) are performed in this sequence.

### (Application of hexane solution of nanoparticles (Step 106))

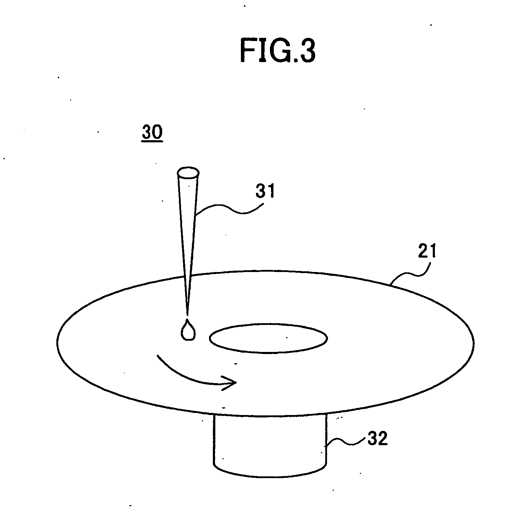

About 1.3cm³ of hexane solution having a density of 5 mg/cm³ in which the nanoparticles are re-distributed is applied to the substrate 21 to which the non-magnetic middle layer 13 has been formed, e.g., by a spin coater 30. Fig. 3 shows an outline configuration of the spin coater 30. With reference to Fig. 3, the spin coater 30 includes a feeder 31 that trickles the hexane solution that contains the nanoparticles, and a spindle 32 that rotates the substrate 21. First, the substrate 21 to which the non-magnetic middle layer 13 has been formed is attached to the spindle 32, and the spindle 32 is rotated in the direction of an arrow shown in Fig. 3 at a low speed. After a predetermined amount of the solution is trickled, the spindle 32 is rotated at a high speed in the direction of the arrow, such that the hexane solution is diffused all over the substrate 21. The number of layers of the nanoparticles is controlled by adjusting the rotation speed of the spindle 32, and the density of the hexane solution.

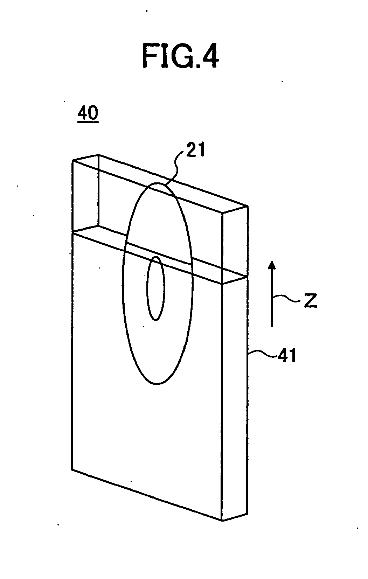

Alternatively, a dip coating method can be employed, instead of the spin coating, such that the hexane solution is coated on both sides of the substrate 21 in one operation. Fig. 4 shows an outline configuration of a dip coater 40. With reference to Fig. 4, the substrate 21 is dipped into a tub 41 that is filled with the hexane solution adjusted to a predetermined density for a predetermined period, and then the substrate 21 is pulled up at a fixed speed in the direction of an arrow marked Z. The number of layers of the nanoparticles is controlled by adjusting the speed, and the density of the hexane solution.

The substrate 21 to which the hexane solution is applied is referred to as a substrate 22. The substrate 22 is dried for about 5 minutes. The self-organization of the nanoparticles of FePt occurs, and the nanoparticles take a multilayer terrace-like super-lattice structure. In this manner, the recording layer 14 having the nanoparticles duly oriented is formed on the non-magnetic middle layer 13. Here, at this stage, since the nanoparticles do not have ferromagnetism at room temperature, the recording layer 14 does not have ferromagnetism.

### (Heat treatment in the magnetic field (Step 107))

Next, the heat treatment in the magnetic field is performed, using heat-treatment equipment 50. First, the substrate 22, having the recording layer 14 formed, is set in a chamber of the heat treatment equipment, which is described in detail later. Air in the chamber is exhausted until the atmosphere pressure becomes about 10⁻⁵ Pa. Then, a predetermined gas is filled to reach a predetermined pressure. Then, the temperature is raised to a predetermined heat-treatment temperature, applying a magnetic field, for a predetermined period. Then, the temperature is lowered.

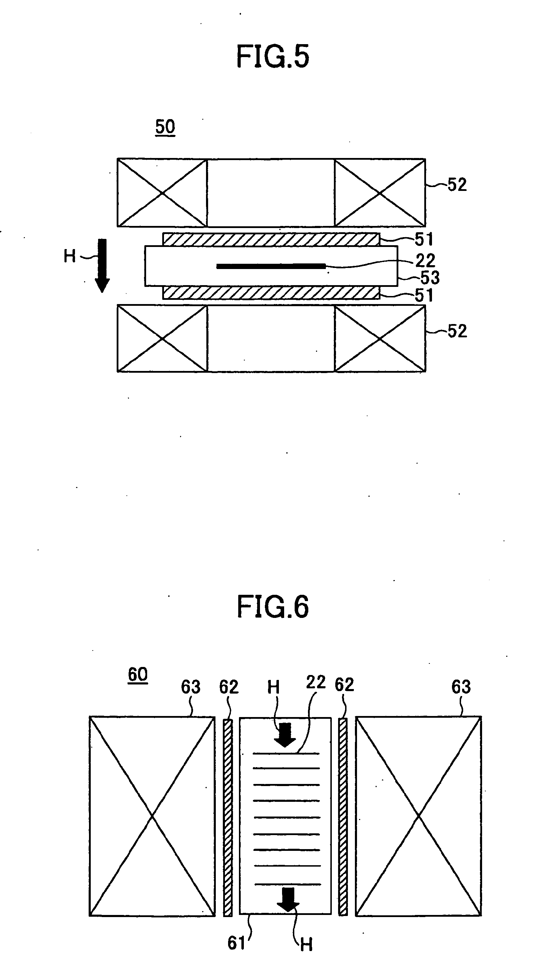

Fig. 5 shows an example of the heat treatment equipment 50 for the heat treatment in the magnetic field. Fig. 5 is a sectional view showing a configuration of the heat treatment equipment 50 that employs magnets in the normal condition (i.e., not a superconductivity magnet).

With reference to Fig. 5, the heat treatment equipment 50 includes two magnets 52 in the normal condition, each of which has a magnetic pole different from each other and counters, two heaters 51 that counter inside the two magnets 52, and a jig (not shown) inside the two heaters, which fixes the substrate 22 on which the recording layer 14 has been formed, and a chamber 53 surrounding the substrate 22. As for the heater 51, a ceramic heater (PBN heater (heat .decomposition boron nitride heater)) or a lamp heater is used. Further, the magnets 52 in the normal condition are for uniformly applying a direct-current magnetic field all over the substrate 22.

The substrate 22 is fixed to the jig, and the direct-current magnetic field is applied to the substrate 22 in the perpendicular direction, e.g., as shown by an arrow marked H in Fig. 5, by the magnets 52 in the normal condition, while the heaters 51 heat the substrate 22.

Further, the heat treatment equipment may employ a superconductivity magnet instead of the magnet 52 in the normal condition. Fig. 6 is a sectional view showing a configuration of heat treatment equipment 60 that employs the superconductivity magnet.

With reference to Fig. 6, the heat treatment equipment 60 includes a cylinder-like superconductivity magnet 63, a heater 62 arranged at a central opening of the superconductivity magnet 63, a single disk processing jig (not shown) for arranging the substrate 22 inside the heater 62, and a chamber 61 surrounding the substrate 22. The heater 62 is the same as that of the heater 51 used by the heat treatment equipment 50. The substrate 22 is arranged to the single disk processing jig, and the substrate 22 is heated by the heater 62, while a direct-current magnetic field in the perpendicular direction, e.g., in the direction of arrows marked H shown in Fig. 6, is applied to the substrate 22 by the superconductivity magnet 63.

Whether the magnetic field is generated by the magnets 52 in the normal condition or by the superconductivity magnet 63, strength of the magnetic field is set between 790 kA/m (10 kOe) and 7900 kA/m (100 kOe). If the magnetic field strength is under 790 kA/m (10 kOe), the hard magnetic nanoparticles 17 are not perpendicularly oriented to a satisfactory degree. If, otherwise, the magnetic field strength is higher than 7900 kA/m, the superconductivity magnet 63 and the like become large, making the heat treatment equipment impractical.

The temperature of the heat treatment is set between 200 and 600 degrees C. If the temperature exceeds 600 degrees C, although high coercivity is obtained, substrates, such as a crystallized glass substrate, will soften and the flatness will be deteriorated. Otherwise, if the temperature is lower than 200 degrees C, sufficient coercivity of the hard magnetic nanoparticles 17 cannot be obtained. The temperature of the heat treatment is preferably set at a range between 300 and 500 degrees C. In this temperature range, a tempered glass can be used as the substrate material and degradation of the magnetic characteristic of the soft magnetic lining layer can be prevented.

For the heat treatment, at least a gas is selected as the atmosphere of the heat treatment from a group of N₂, He, Ne, Ar, Kr, Xe, and H₂. With the gas that has inactive or reduction nature, oxidization of the hard magnetic nanoparticles 17 and the magnetic lining layer 12 can be prevented. The gas as the atmosphere for the heat treatment desirably is N₂. N₂ is considered to form an invaded type alloy with the alloy under process, such as FePt, that constitutes the hard magnetic nanoparticles 17, providing higher perpendicular coercivity than Ar and the like, which allows the heat treatment temperature to be lower.

Further, the pressure of the gas atmosphere of the heat treatment is preferably set at a range between 1 and 10⁺⁶ Pa. At a given heat treatment temperature, the higher the pressure is, the greater coercivity of the recording layer 14 is obtained. If the pressure is lower than 1 Pa, the coercivity will not increase. More preferably, the pressure is set at a range between 10⁺³ Pa to 10⁺⁶ Pa.

Time of the heat treatment, which is the time during which the temperature is maintained at the predetermined temperature and the magnetic field is applied at the predetermined strength, is set at a range between 10 to 120 minutes. Although the coercivity increases, as the heat treatment time is set longer, the time is preferred to be about 30 minutes from a viewpoint of production efficiency.

### (Film formation of the overcoat layer 15 (Step 108))

Next, the overcoat layer 15 is formed on the recording layer 14. For the overcoat layer 15, carbon, carbon hydride, carbon nitride, and the like are used. For example, the overcoat layer 15 of carbon hydride is formed by sputtering the carbon in a mixed atmosphere of Ar gas and H₂ gas, where partial pressure is adjusted by the H₂ gas.

### (Formation of the lubricous layer 16 (Step 109))

Next, a lubricant is applied to the overcoat layer 15 so that the lubricous layer 16 is formed. For this purpose, a lubricant containing perfluoro polyether as the main chain, for example, is used. For example, the lubricous layer is formed by dipping Fomblin AM3001 solution made by Ausimont.

The perpendicular magnetic memory medium 10 shown in Fig. 1 is formed in the manner mentioned above.

In the following, embodiments 1 through 7 of the present invention are described, contrasting with comparative examples that are not according to the present invention.

### (Embodiment 1)

The perpendicular magnetic memory medium of the embodiment 1 is structured as shown in Fig. 1, and includes a substrate 11 on the surface of which SiO₂ is formed by heat oxidizing the surface of Si wafer, a soft magnetic lining layer 12 that consists of 200 nm thick fine crystals of FeAlSi, a non-magnetic middle layer 13 that consists of 10 nm thick Al₂O₃, and a recording layer 14 formed by hard magnetic nanoparticles of Fe₅₀Pt₅₀, an overcoat layer 16 that consists of 4 nm thick carbon hydride, and a 1.0 nm thick lubricous layer that consists of Fomblin AM3001.

The following was performed:

A heat treatment in a magnetic field after formation of the recording layer 14 was performed in a decompressed N₂ atmosphere at 1.5x10⁴ Pa, with a magnetic field of 3950 kA/m (50kOe) applied, for 30 minutes. The heat treatment was performed under three temperature conditions, namely, 460 degrees C, 480 degrees C, and 530 degrees C.

The average diameter of the hard magnetic nanoparticles 17 of Fe₅₀Pt₅₀, which constitute the recording layer 14, was 6.0nm, the standard deviation of the diameter of the nanoparticles was 8% of the average diameter of the nanoparticles, and the average interval between nanoparticles was 4.0 nm. Here, measurements were performed by photographing an image of the recording layer 14 using HRTEM (high resolution transmission electron microscope). Using the photograph that shows the image expanded by 2 million times, areas of 100 hard magnetic nanoparticles 17 that were photographed were measured. Assuming that the image of each nanoparticle was a circle, diameters of the 100 nanoparticles were obtained, and then, the average diameter of the nanoparticles and the standard deviation of the diameter of the nanoparticles were obtained. The average interval of the hard magnetic nanoparticles 17 was obtained by measuring intervals between the 100 hard magnetic nanoparticles 17.

### (Embodiment 2)

The perpendicular magnetic memory medium of embodiment 2 is constituted like embodiment 1.

The heat treatment in the magnetic field after formation of the recording layer 14 was performed in a decompressed Ar atmosphere at 1.5x10⁴ Pa, with the magnetic field of 3950 kA/m (50kOe) being applied, for 30 minutes. The heat treatment was performed under four temperature conditions, namely, 460 degrees C, 480 degrees C, 530 degrees C, and 560 degrees C.

### (Embodiment 3)

The perpendicular magnetic memory medium of embodiment 3 is constituted like embodiment 1.

The heat treatment in the magnetic field after formation of the recording layer 14 was performed in a pressurized N2 atmosphere at 2.5x10⁵ Pa, with the magnetic field of 3950 kA/m (50kOe) being applied, for 30 minutes. The heat treatment was performed under two temperature conditions, namely, 360 degrees C and 400 degrees C.

### (Embodiment 4)

The perpendicular magnetic memory medium of embodiment 4 is constituted like embodiment 1.

The heat treatment in the magnetic field after the formation of the recording layer 14 was performed in a pressurized Ar atmosphere at 2.5x10⁵ Pa, with the magnetic field of 3950 kA/m (50kOe) being applied, for 30 minutes. The heat treatment was performed under three temperature conditions, namely, 360 degrees C, 400 degrees C, and 430 degrees C.

### (Comparative Example 1)

A perpendicular magnetic memory medium of comparative example 1, which does not belong to the present invention, was constituted like embodiment 1.

The heat treatment in the magnetic field after formation of the recording layer was performed in vacuum at 2x10⁴ Pa, with the magnetic field of 3950 kA/m (50kOe) being applied for 30 minutes. The heat treatment was performed under two temperature conditions, namely, 530 degrees C and 580 degrees C.

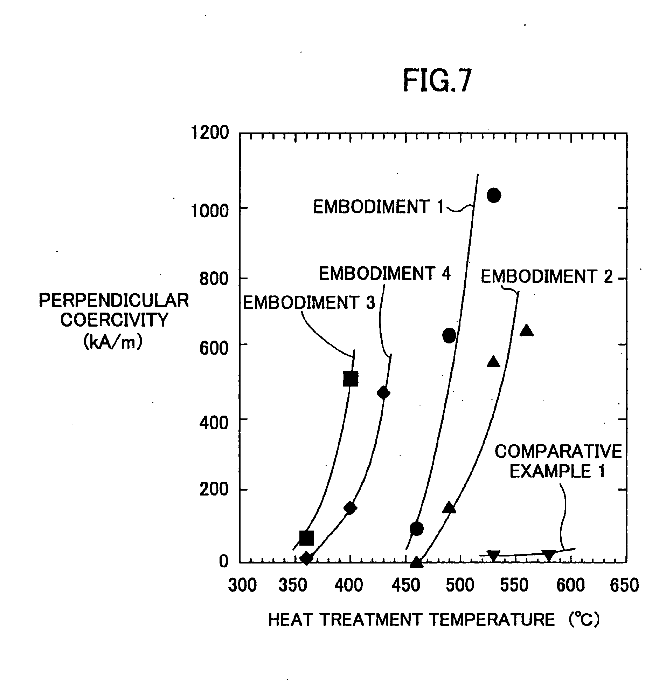

Fig. 7 shows relations between the perpendicular coercivity and the heat treatment temperatures. Fig. 7 clearly evidences that the perpendicular coercivity Hc1 of the perpendicular magnetic memory medium of the embodiments 1-4 increases as the temperature of the heat treatment gets higher. For example, when the heat treatment temperature of the embodiment 3 was 400 degrees C, the perpendicular coercivity Hc1 was 514 kA/m. Under these conditions, in-plane coercivity Hc₂ in the horizontal direction was measured as 130 kA/m. The ratio of the in-plane (horizontal) coercivity to the perpendicular coercivity Hc₂/Hc₁ was, therefore, 25%, indicating that the magnetic easy axis was perpendicular to the substrate.

In contrast, Fig. 7 shows that the perpendicular coercivity did not increase in the case of the perpendicular magnetic memory medium of the comparative example 1 at the higher heat treatment temperature of 580 degrees C.

By comparing the embodiment 1 with the embodiment 3, and comparing the embodiment 2 with the embodiment 4, Fig. 7 further evidences that the same perpendicular coercivity is obtained at a lower heat treatment temperature when the pressure of the gas atmosphere is higher for the same gas.

Further, if embodiment 1 is compared with embodiment 2, or embodiment.3 is compared with embodiment 4, it is evidenced that the N2 gas atmosphere requires lower heat treatment temperature than the Ar gas atmosphere for the same atmosphere pressure in order to obtain the same perpendicular coercivity.

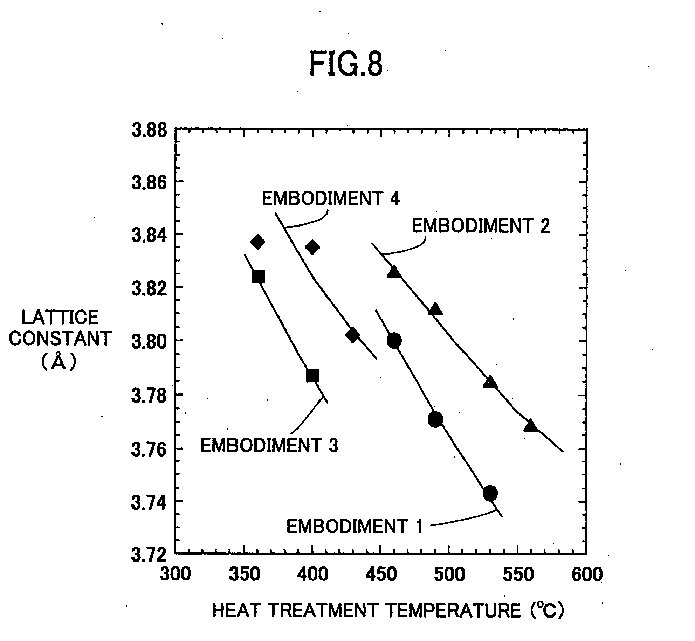

Fig. 8 shows relations between lattice constants in the c axis of FePt that constitutes the hard magnetic nanoparticles and heat treatment temperatures. With reference to Fig. 8, the higher the heat treatment temperature was, the smaller the lattice constant of c axis was. Generally, the smaller the lattice constant of c axis of the FePt nanoparticles is, the more the nanoparticles are regularized. Therefore, Fig. 8 indicates that the higher the heat treatment temperature was, the higher the degree of the regularization was. If embodiment 1 is compared with embodiment 3, or embodiment 2 is compared with embodiment 4, it is learned that the lattice constant of c axis was made smaller (that is, the higher regularization was obtained) by the heat treatment in the N2 gas atmosphere than the Ar gas atmosphere for the same gas pressure. Here, the lattice constants were measured by an X-ray diffraction meter method.

### (Embodiment 5)

The perpendicular magnetic memory medium of embodiment 5 is constituted like embodiment 1.

The heat treatment in the magnetic field after the formation of the recording layer 14 was performed in an N₂ atmosphere, with the magnetic field of 3950 kA/m (50kOe) being applied, for 30 minutes at 530 degrees C. The heat treatment was performed under three gas pressure conditions, namely, 5 Pa, 1.5x10² Pa, and 1.5x10⁴ Pa.

### (Comparative example 2)

A perpendicular magnetic memory medium of comparative example 2, which does not belong to the present invention, was constituted like embodiment 1.

The N2 gas pressure was set at 2x10⁻⁴ Pa for the heat treatment in the magnetic field after the formation of the recording layer 14, all other factors remaining the same as those of embodiment 5.

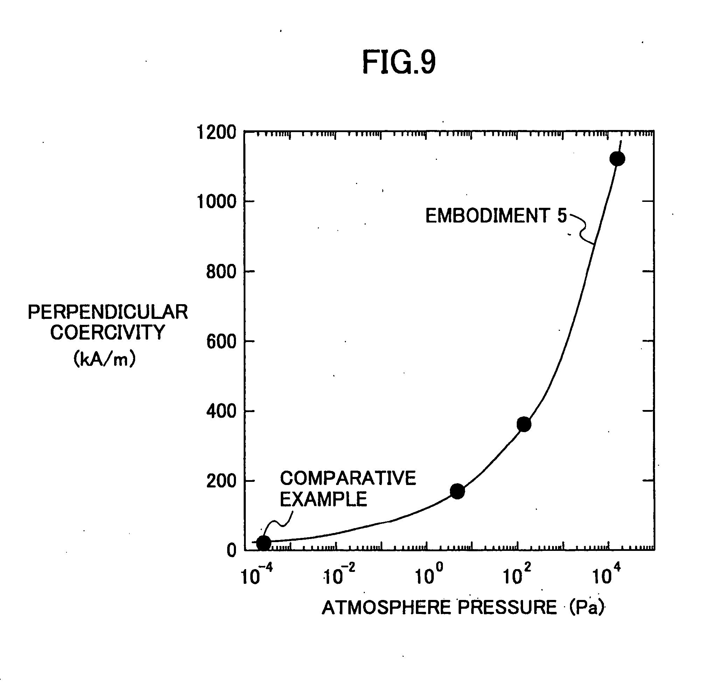

Fig. 9 shows relations between the perpendicular coercivity of the perpendicular magnetic memory medium of embodiment 5 and comparative example 2, and the N₂ atmosphere gas pressure. As evident from Fig. 9, comparative example 2 does not provide high perpendicular coercivity, while embodiment 5 provides higher perpendicular coercivity as the N₂ atmosphere gas pressure is made high. It is shown that the perpendicular coercivity increased especially beyond about 1 Pa.

### (Embodiment 6)

The perpendicular magnetic memory medium of embodiment 6 was constituted like embodiment 1.

The heat treatment in the magnetic field after the formation of the recording layer 14 was performed in a decompressed N2 atmosphere at 1.5x10⁴ Pa, with the magnetic field of 3950 kA/m (50kOe) being applied, at 460 degrees C for 30 minutes.

### (Embodiment 7)

The perpendicular magnetic memory medium of embodiment 7 was constituted like embodiment 1.

The heat treatment in the magnetic field after the formation of the recording layer 14 was performed in a pressurized N2 atmosphere at 2.5x10⁵ Pa, with the magnetic field of 3950 kA/m (50kOe) being applied, at 460 degrees C for 30 minutes.

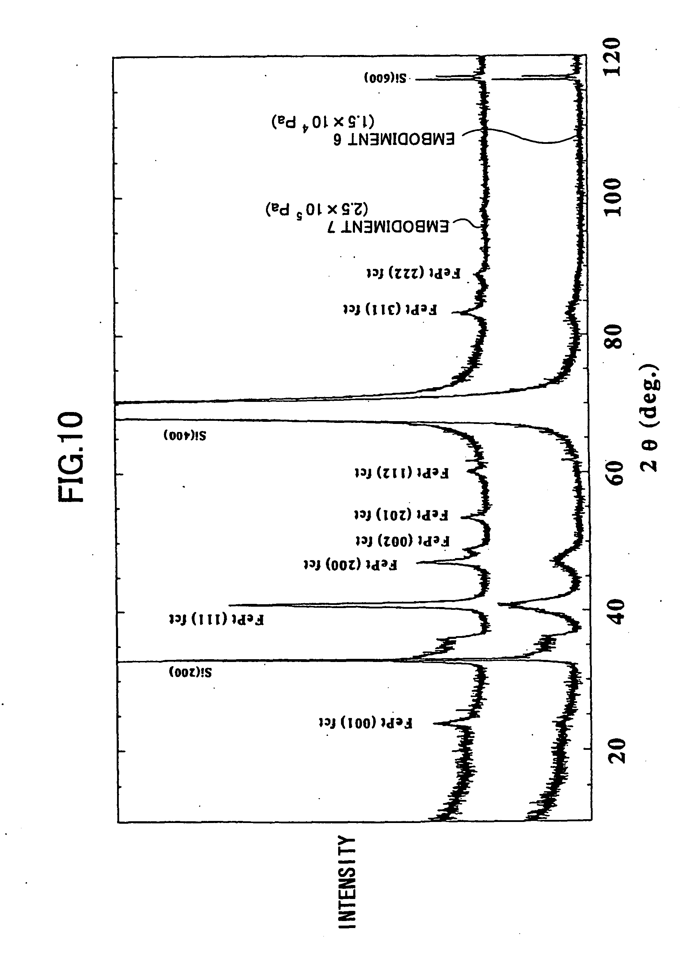

Fig. 10 shows an X-ray diffraction pattern of the perpendicular magnetic memory medium of embodiments 6 and 7. With reference to Fig. 10, peaks of the face-centered tetragonal (fct) lattices of an FePt ordered alloy are shown, which indicate that desired regularization of the FePt ordered alloy was obtained by the embodiments 6 and 7. Especially, embodiment 7, which is expressed by the upper plot in Fig. 10, using the higher gas pressure in the heat treatment, obtained sharper peaks, i.e., higher regularization degree, than embodiment 6, using the lower gas pressure, which is expressed by the lower plot.

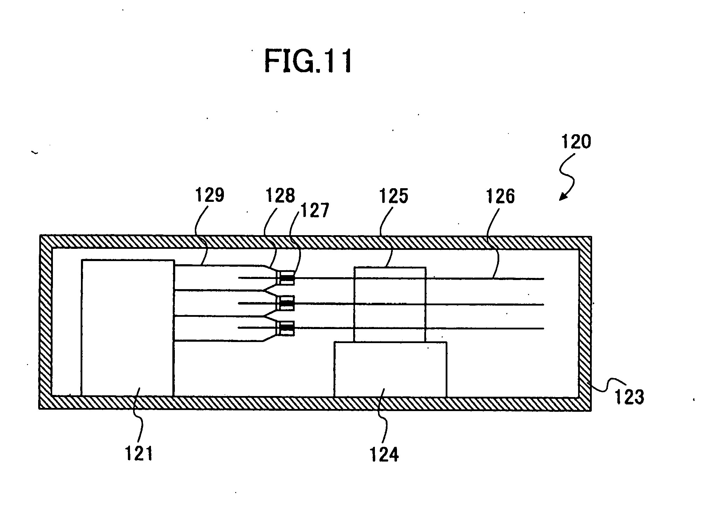

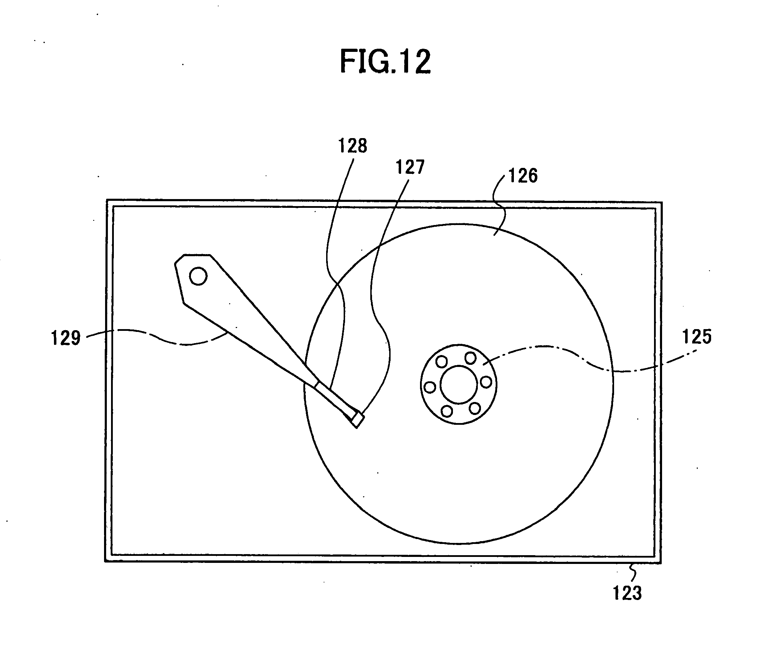

Next, an embodiment of a magnetic memory storage of the present invention is explained with reference to Fig. 11 and Fig. 12. Fig. 11 is a sectional view showing the principal part of the magnetic memory storage of the embodiment. Fig. 12 is a plane view showing the principal part of the magnetic memory storage of the embodiment.

As shown in Fig. 11 and Fig. 12, the magnetic memory storage 120 includes a motor 124, a hub 125, two or more perpendicular magnetic memory media 126, two or more recording and reproducing heads 127, two or more suspensions 128, two or more arms 129, and an actuator unit 121, all of which are housed in a housing 123. The perpendicular magnetic memory media 126 are attached to the hub 125 that is rotated by the motor 124. The recording and reproducing heads 127 are compounded type heads where the recording heads employ a thin film head, and the reproducing heads employ an MR element (magnetic resistance effect type element), a GMR element (great magnetic resistance effect type element), or a TMR element (tunnel magnetism effect type element). The recording heads may use a monopole magnetic head, or a ring type head. Each of the recording and reproducing heads 127 is attached at the tip of the corresponding arm 129 through the suspension 128. The arm 129 is driven by the actuator unit 121. The basic composition of this magnetic memory storage itself is common knowledge, and the detailed explanation thereof is omitted.

The magnetic memory storage 120 of the present embodiment is characterized by installing the perpendicular magnetic memory media 126 of the embodiments 1-7 of the present invention, having a layered structure as shown in Fig. 1. The number of the perpendicular magnetic memory media 126 is not limited to three, but any number of perpendicular magnetic memory media may be used.

The basic composition of the magnetic memory storage 120 is not limited to what is shown in Fig. 11 and Fig. 12. The perpendicular magnetic memory media 126 used by the present invention are not limited to magnetic disks.

In addition, although the embodiments of the present invention are explained, where the perpendicular magnetic memory medium has a soft magnetic lining layer 12 and a non-magnetic middle layer 13, these items are not indispensable. For example, the soft magnetic lining layer 12 is formed according to the method of a recording head, for example, a single magnetic pole head method. Further, a configuration that does not include the soft magnetic lining layer 12 and the non-magnetic middle layer 13 has proven that its characteristics are similar to the characteristics shown in Fig. 8 through Fig. 11 about embodiments 1-7.

As described in detail in the above, the present invention provides a perpendicular magnetic memory medium capable of high-density recording and reproducing and a manufacturing method thereof that gives perpendicular magnetic orientation to hard magnetic nanoparticles without deteriorating the flatness of the substrate and the soft magnet characteristics of the soft magnetic lining layer.

## Claims

1. A perpendicular magnetic memory medium comprising a recording layer that is formed by arranging hard magnetic nanoparticles on a substrate, wherein an average diameter of the hard magnetic nanoparticles is between 2nm and 10nm, a standard deviation of diameters of the hard magnetic nanoparticles is 10% or less of the average diameter of the hard magnetic nanoparticles, an average interval between the hard magnetic nanoparticles is between 0.2nm and 5nm, and a magnetic easy axis of the recording layer is perpendicular to a surface of the substrate,
wherein a soft magnetic lining layer is provided between the substrate and the recording layer, and a non-magnetic middle layer is provided between the soft magnetic lining layer and the recording layer, wherein the non-magnetic middle layer contains Ti, C, Pt, TiCr, CoCr, SiO₂, MgO or Al₂O₃.

2. The perpendicular magnetic memory medium as claimed in claim 1, wherein the hard magnetic nanoparticles contain at least two or more elements selected from the group consisting of Fe, Co, Ni, Pt, and Pd.

3. The perpendicular magnetic memory medium as claimed in claim 1 or 2, wherein the soft magnetic lining layer contains at least one element selected lining layer contains at least one element selected from the group consisting of Fe, Co, Ni, Al, Si, Ta, Ti, Zr, Hf, V, Nb, C, and B.

4. A manufacturing method of a perpendicular magnetic memory medium that has a recording layer formed by arranging hard magnetic nanoparticles on a substrate, comprising a process of heat treatment in a magnetic field, wherein the recording layer is heated in a gas atmosphere, while a magnetic field is applied perpendicularly to the recording layer, the process of heat treatment in the magnetic field making a magnetic easy axis of the recording layer perpendicular to a surface of the substrate, and wherein the temperature used in the process of heat treatment in the magnetic field is decreased as the pressure of the gas atmosphere is increased.

5. The manufacturing method of the perpendicular magnetic memory medium as claimed in claim 4, wherein a magnitude of the magnetic field of the process is set between 790 kA/m and 7900 kA/m, pressure of the gas atmosphere of the process is set between 10⁺³ to 10⁺⁶ Pa, and temperature of the process is set between 200 degrees C and 600 degrees C.

6. The manufacturing method of the perpendicular magnetic memory medium as claimed in claim 4 or 5, wherein the gas of the gas atmosphere used in the process is at least one selected from the group consisting of N2, He, Ne, Ar, Kr, Xe, and H2.

7. A magnetic memory storage, comprising the perpendicular magnetic memory medium as claimed in claim 1, 2 or 3.

8. The perpendicular magnetic memory medium as claimed in claim 1, wherein a ratio H_{c2}/H_{c1} is 30% or less, in which H_{c1} represents a coercivity in a direction perpendicular to the surface of the substrate and H_{c2} represents a coercivity in a direction parallel to the surface of the substrate.

9. The magnetic memory storage as claimed in claim 7, wherein a ratio H_{c2}/H_{c1} is 30% or less, in which H_{c1} represents a coercivity in a direction perpendicular to the surface of the substrate and H_{c2} represents a coercivity in a direction parallel to the surface of the substrate.

## Patentansprüche

1. Magnetspeichermedium mit Senkrechtaufzeichnung, mit einer Aufzeichnungsschicht, die durch Anordnen von hartmagnetischen Nanopartikeln auf einem Substrat gebildet ist, bei dem ein durchschnittlicher Durchmesser der hartmagnetischen Nanopartikel zwischen 2 nm und 10 nm liegt, eine Standardabweichung der Durchmesser der hartmagnetischen Nanopartikel 10 % oder weniger des durchschnittlichen Durchmessers der hartmagnetischen Nanopartikel beträgt, ein durchschnittlicher Abstand zwischen den hartmagnetischen Nanopartikeln zwischen 0,2 nm und 5 nm liegt und eine Magnetisierungsvorzugsachse der Aufzeichnungsschicht zu einer Oberfläche des Substrates senkrecht ist,
bei dem eine weichmagnetische Belagschicht zwischen dem Substrat und der Aufzeichnungsschicht vorgesehen ist und eine nichtmagnetische mittlere Schicht zwischen der weichmagnetischen Belagschicht und der Aufzeichnungsschicht vorgesehen ist, wobei die nichtmagnetische mittlere Schicht Ti, C, Pt, TiCr, CoCr, SiO₂, MgO oder Al₂O₃ enthält.

2. Magnetspeichermedium mit Senkrechtaufzeichnung nach Anspruch 1, bei dem die hartmagnetischen Nanopartikel wenigstens zwei oder mehr Elemente enthalten, die ausgewählt sind aus der Gruppe bestehend aus Fe, Co, Ni, Pt und Pd.

3. Magnetspeichermedium mit Senkrechtaufzeichnung nach Anspruch 1 oder 2, bei dem die weichmagnetische Belagschicht wenigstens ein Element enthält, das ausgewählt ist aus der Gruppe bestehend aus Fe, Co, Ni, Al, Si, Ta, Ti, Zr, Hf, V, Nb, C und B.

4. Herstellungsverfahren eines Magnetspeichermediums mit Senkrechtaufzeichnung, das eine Aufzeichnungsschicht hat, die durch Anordnen von hartmagnetischen Nanopartikeln auf einem Substrat gebildet wird, mit einem Wärmebehandlungsprozess in einem Magnetfeld, bei dem die Aufzeichnungsschicht in einer Gasatmosphäre erhitzt wird, während ein Magnetfeld senkrecht zu der Aufzeichnungsschicht angewendet wird, welcher Wärmebehandlungsprozess in dem Magnetfeld bewirkt, dass eine Magnetisierungsvorzugsachse der Aufzeichnungsschicht zu einer Oberfläche des Substrates senkrecht wird, und bei dem die bei dem Wärmebehandlungsprozess in dem Magnetfeld verwendete Temperatur verringert wird, wenn der Druck der Gasatmosphäre zunimmt.

5. Herstellungsverfahren des Magnetspeichermediums mit Senkrechtaufzeichnung nach Anspruch 4, bei dem eine Größe des Magnetfeldes des Prozesses zwischen 790 kA/m und 7900 kA/m liegt, der Druck der Gasatmosphäre des Prozesses zwischen 10⁺³ bis 10⁺⁶ Pa liegt und die Temperatur des Prozesses zwischen 200 Grad C und 600 Grad C liegt.

6. Herstellungsverfahren des Magnetspeichermediums mit Senkrechtaufzeichnung nach Anspruch 4 oder 5, bei dem das Gas der Gasatmosphäre, die bei dem Prozess verwendet wird, wenigstens eines ist, das ausgewählt wird aus der Gruppe bestehend aus N₂, He, Nc, Ar, Kr, Xe und H₂.

7. Magnetspeichervorrichtung, die das Magnetspeichermedium mit Senkrechtaufzeichnung nach Anspruch 1, 2 oder 3 umfasst.

8. Magnetspeichermedium mit Senkrechtaufzeichnung nach Anspruch 1, bei dem ein Verhältnis H_{c2}/H_{c1} 30 % oder weniger beträgt, wobei H_{c1} eine Koerzitivkraft in einer Richtung senkrecht zu der Oberfläche des Substrates darstellt und H_{c2} eine Koerzitivkraft in einer Richtung parallel zu der Oberfläche des Substrates darstellt.

9. Magnetspeichervorrichtung nach Anspruch 7, bei der ein Verhältnis H_{c2}/H_{c1} 30 % oder weniger beträgt, wobei H_{c1} eine Koerzitivkraft in einer Richtung senkrecht zu der Oberfläche des Substrates darstellt und H_{c2} eine Koerzitivkraft in einer Richtung parallel zu der Oberfläche des Substrates darstellt.

## Revendications

1. Support de mémorisation magnétique perpendiculaire comprenant une couche d'enregistrement qui est formée en agençant des nanoparticules magnétiques dures sur un substrat, dans lequel un diamètre moyen des nanoparticules magnétiques dures est entre 2 nm et 10 nm, un écart type des diamètres des nanoparticules magnétiques dures est de 10 % ou moins du diamètre moyen des nanoparticules magnétiques dures, un intervalle moyen entre les nanoparticules magnétiques dures est entre 0,2 nm et 5 nm, et un axe facile magnétique de la couche d'enregistrement est perpendiculaire à une surface du substrat,
dans lequel une couche de doublure magnétique molle est prévue entre le substrat et la couche d'enregistrement, et une couche centrale non magnétique est prévue entre la couche de doublure magnétique molle et la couche d'enregistrement, dans lequel la couche centrale non magnétique contient du Ti, du C, du Pt, du TiCr, du CoCr, du SiO₂, du MgO ou du Al₂O₃.

2. Support de mémorisation magnétique perpendiculaire selon la revendication 1, dans lequel les nanoparticules magnétiques dures contiennent au moins deux éléments ou plus sélectionnés dans le groupe consistant en du Fe, du Co, du Ni, du Pt et du Pd.

3. Support de mémorisation magnétique perpendiculaire selon la revendication 1 ou 2, dans lequel la couche de doublure magnétique molle contient au moins un élément sélectionné dans le groupe consistant en du Fe, du Co, du Ni, du Al, du Si, du Ta, du Ti, du Zr, du Hf, du V, du Nb, du C et du B.

4. Procédé de fabrication d'un support de mémorisation magnétique perpendiculaire qui comporte une couche d'enregistrement formée en agençant des nanoparticules magnétiques dures sur un substrat, comprenant un processus de traitement thermique dans un champ magnétique, dans lequel la couche d'enregistrement est chauffée dans une atmosphère gazeuse, tandis qu'un champ magnétique est appliqué perpendiculairement à la couche d'enregistrement, le processus de traitement thermique dans le champ magnétique rendant un axe facile magnétique de la couche d'enregistrement perpendiculaire à une surface du substrat, et dans lequel la température utilisée dans le processus de traitement thermique dans le champ magnétique est diminuée alors que la pression de l'atmosphère gazeuse est augmentée.

5. Procédé de fabrication du support de mémorisation magnétique perpendiculaire selon la revendication 4, dans lequel l'amplitude du champ magnétique du processus est fixée entre 790 kA/m et 7900 kA/m, la pression de l'atmosphère gazeuse du processus est fixée entre 10⁺³ et 10⁺⁶ Pa, et la température du processus est fixée entre 200°C et 600°C.

6. Procédé de fabrication du support de mémorisation magnétique perpendiculaire selon la revendication 4 ou 5, dans lequel le gaz de l'atmosphère gazeuse utilisé dans le processus est au moins l'un sélectionné dans le groupe consistant en du N₂, du He, du Ne, du Ar, du Kr, du Xe et du H₂.

7. Dispositif de mémorisation à mémoire magnétique, comprenant le support de mémorisation magnétique perpendiculaire selon la revendication 1, 2 ou 3.

8. Support de mémorisation magnétique perpendiculaire selon la revendication 1, dans lequel un rapport H_{c2}/H_{c1} est de 30 % ou moins, dans lequel H_{c1} représente une coercitivité dans une direction perpendiculaire à la surface du substrat et H_{c2} représente une coercitivité dans une direction parallèle à la surface du substrat.

9. Dispositif de mémorisation à mémoire magnétique selon la revendication 7, dans lequel un rapport H_{c2}/H_{c1} est de 30 % ou moins, dans lequel H_{c1} représente une coercitivité dans une direction perpendiculaire à la surface du substrat et H_{c2} représente une coercitivité dans une direction parallèle à la surface du substrat.
